# EUROPEAN PATENT APPLICATION

(11) **EP 4 718 358 A1**
(43) Date of publication of application: **01.04.2026**
(21) Application number: 24202614.4
(22) Date of filing: 25.09.2024
(51) Int. Cl.: G06Q 20/04, G06Q 20/22, G06Q 20/38, G07F 17/14, G06Q 20/40

(54) **A METHOD FOR LINKING CONSUMER PAYMENT CREDENTIALS**

(71) Applicant: Mastercard International Incorporated, Purchase, NY 10577 (US)
(72) Inventor: OKOLORIE, William, London (GB)
(74) Representative: Murgitroyd & Company

(57) **Abstract**

The present disclosure relates to a method for linking consumer payment credentials. The method includes storing, in a database, a first account identifier and a second account identifier, wherein the first account identifier is linked to the second account identifier in the database; receiving a first presentment request, wherein the first presentment request includes a first merchant identifier and the first account identifier; receiving a subsequent first presentment request, wherein the subsequent first presentment request includes a second merchant identifier and the second account identifier; determining, via the database, the first account identifier and the second account identifier are linked; generating a transaction link identifier, wherein the transaction link identifier identifies a link between the first presentment request and the subsequent first presentment request; and sending the transaction link identifier to an acquirer

## Description

### TECHNICAL FIELD

The present disclosure relates generally to a method for linking consumer payment credentials and finds particular, although not exclusive, utility in providing a method of linking payment credentials, such as a physical payment card and a token, to allow the linked payment credentials to be used interchangeably.

### BACKGROUND

A typical transaction in a transit environment may be initiated by a consumer at a physical terminal operated by a transit operator, such as a gate at a train or tube station, a reader on a bus, a platform validator, or a revenue inspection device. The physical terminal may prevent or restrict the consumer from passing therethrough unless one or more conditions are met, such as the consumer being in possession of a valid ticket or providing valid payment credentials.

The consumer may enter a transit network by providing valid payment credentials at the terminal. The consumer may then complete their journey on the transit network and exit the transit network by again providing their payment credentials.

If the consumer provides the same payment credentials when entering and exiting the transit network, the transit operator is able to link the start and end points of the consumer's journey and determine the appropriate fare to charge.

If the consumer provides different payment credentials when entering and exiting the transit network, the transit operator is unable to link the start and end points of the consumer's journey, and will typically charge a maximum fare.

With prior known digital wallet applications, it is possible to tokenize payment credentials. For example, a consumer may add their physical card to their digital wallet application on their smartphone and on their smart watch. The consumer may therefore make payments with either their physical card, the token on their smart phone, or the token on their smart watch. The physical card, the token on the smart phone and the token on the smart watch each relate to the same funding account. However, due to the way in which tokenization is currently carried out, each of the physical card, the token on the smart phone and the token on the smart watch will present different payment credentials. For example, each of the physical card, the token on the smart phone and the token on the smart watch will present a different Primary Account Number (PAN) to a reader, such as terminal of the transit network.

A consumer may enter the transit network by presenting the token on their smart phone. However, during the consumer's journey, their smart phone may lose power or may be lost or stolen. The consumer may then present their physical card or the token on their smart watch to exit the transit network. Although payment credentials relating to the same funding account are provided at the start and end of the consumer's journey, the transit operator is unable make the link because different payment credentials are provided.

Furthermore, the consumer may make a payment with their physical card. Should the user wish to obtain a refund, they must typically present their payment card, and it is not possible to process a refund by providing the token on their smart phone or the token on their smart watch, even though each of the payment credentials relate to the same funding account.

It is therefore desirable to provide a method of linking consumer payment credentials to avoid the above-mentioned problems. The aspects of the present disclosure provide such methods.

### SUMMARY

According to a first aspect, there is provided a method for linking consumer payment credentials, the method comprising: storing, in a database, a first account identifier and a second account identifier, wherein the first account identifier is linked to the second account identifier in the database; receiving a first presentment request, wherein the first presentment request includes a first merchant identifier and the first account identifier; receiving a subsequent first presentment request, wherein the subsequent first presentment request includes a second merchant identifier and the second account identifier; determining, via the database, the first account identifier and the second account identifier are linked; generating a transaction link identifier, wherein the transaction link identifier identifies a link between the first presentment request and the subsequent first presentment request; and sending the transaction link identifier to an acquirer.

In this way, the first account identifier and the second account identifier are linked, such that the first account identifier and the second account identifier may be used interchangeably. For example, and as described further herein, the first account identifier may be used to enter a transit network and the second account identifier may be used to exit the transit network, and the linking of the account identifiers allows for a correct charge to be applied. As a further example, and as described further herein, the first account identifier may be used to make a payment, and the second account identifier may be used to process a refund.

Consumer payment credentials may be the elements of data necessary to place an authorized transaction. For example, with physical card payment credentials, the payment credentials may comprise a number string typically referred to as a Primary Account Number (PAN). In some circumstances, the payment credentials may also comprise an expiry date and a card verification code or value (CVC/CVV). As a further example, with tokenized payment credentials, the PAN of the physical card is typically replaced with a different number string typically referred to as the token. The payment credentials may also comprise a cryptogram or other such secure identifier.

The database may be stored locally or cloud-based. The database may be encrypted or otherwise protected. A benefit of using tokenized payment credentials is that the PAN of the physical card is not exposed when making a transaction, so it is important to keep secure the link between physical card payment credentials and linked tokenized payment credentials.

The first account identifier and the second account identifier may include payment credentials, or a portion of payment credentials. The first account identifier may relate to physical card payment credentials or tokenized payment credentials. The second account identifier may relate to physical card payment credentials or tokenized payment credentials. Accordingly, the method of the first aspect may link first physical card payment credentials to second physical card payment credentials, physical card payment credentials to tokenized payment credentials, or first tokenized payment credentials to second tokenized payment credentials.

The first account identifier being linked to the second account identifier in the database may mean that a transaction or a partial transaction made with the first account identifier may be linked with a transaction or a partial transaction made with the second account identifier, even though the payment credentials are different.

The first presentment request may be indicative of a consumer first presenting payment credentials when making a first transaction, such as a purchase, or when making a first action in a distributed transaction, such as entering a transit network. The subsequent first presentment request may be indicative of a consumer first presenting payment credentials when making a second transaction, such as a refund, or when making a second action in a distributed transaction, such as exiting a transit network.

The first merchant identifier may be data identifying the first merchant. For example, the first merchant identifier may comprise a unique data string allocated to the first merchant.

The second merchant identifier may be data identifying the second merchant. For example, the second merchant identifier may comprise a unique data string allocated to the second merchant.

Determining, via the database, the first account identifier and the second account identifier are linked may include searching the database, via any known means or method, for the first or second account identifier and identifying the link between the first account identifier and the second account identifier.

The transaction link identifier may be generated via any known means or method. The transaction link identifier may be unique to each linked transaction. Accordingly, the transaction link identifier may be a one-time use code or other such identifier. Alternatively, the transaction link identifier may be consistent across two or more transactions, so that the transaction link identifier is multi-use.

Each merchant may be provided a unique multi-use transaction link identifier that may be stored by the merchant and provided in a future transaction authorization message. In this way, it is not necessary to search the database and identify the link between the first account identifier and the second account identifier when authorizing a future linked transaction.

Identifying a link between the first presentment request and the subsequent first presentment request may mean that, although different account identifiers, and therefore payment credentials, are provided in the first presentment request and the second presentment request, the first presentment request and the second presentment request are determined to be first and second actions in a single transaction flow.

Sending the transaction link identifier to the acquirer may mean transmitting a message to the acquirer, wherein the message includes the transaction link identifier. Alternatively, sending the transaction link identifier to the acquirer may mean making the transaction link identifier available to the acquirer, for example by placing the transaction link identifier in a database accessible by the acquirer.

One of the first account identifier and the second account identifier may be associated with a token, and the other of the first account identifier and the second account identifier may be associated with a physical card. In this way, the consumer may enter the transit network by presenting their physical card or a token on their device, and the consumer may exit the transit network by presenting the other of their physical card and the token on their device. The physical card and token on their device are linked in the database, so it is possible to link the consumer's journey start and end points and times.

Alternatively, the first account identifier may be associated with a first token, and the second account identifier may be associated with a second token. In this way, the consumer may enter the transit network by presenting the first token on their first device such as a smart phone, and the consumer may exit the transit network by presenting the second token on their second device such as a smart watch. The first token and the second token may both be associated with the same physical card or funding account, or may be associated with different physical cards or different but linked funding accounts as described in more detail herein.

The first account identifier may be associated with a first physical card, and the second account identifier may be associated with a second physical card. The first physical card and the second physical card may both be associated with the same funding account, or may be associated with different but linked funding accounts as described in more detail herein.

The first presentment request and the subsequent first presentment request may be received from the acquirer. Accordingly, the typical and prior known payment authorization request message chain may be maintained.

The method may further comprise determining the subsequent first presentment request was received within a predetermined threshold time period from receiving the first presentment request. In this way, the first presentment request and the subsequent first presentment request may only be linked when the subsequent first presentment request is received within a predetermined time of the first presentment request.

The first presentment request and the subsequent first presentment request may include a respective timestamp indicating a time at which the respective first presentment request was initiated by a consumer. The timestamp may be received alongside the respective first presentment request and the subsequent first presentment request. The timestamp may, for example, indicate the time at which the consumer enters or exits a transit network. Accordingly, a suitable fare may be determined based on the entry and exit times.

Alternatively, the method may further comprise storing, in a further database, a time at which the first presentment request and the subsequent first presentment request are received. The time at which the first presentment request and the subsequent first presentment request are received may be stored only if no timestamp is provided. Accordingly, the method may further comprise determining no timestamp is provided and assigning a time to the first presentment request and/or subsequent first presentment request. In this way, first presentment requests not including a timestamp or other time-related data may still be processed.

The threshold time period may be 24 hours. Alternatively, the threshold time period may be a calendar day. For example, the first presentment request being initiated at 08:00 on 01 January 2025 and the subsequent first presentment request being initiated at 18:30 on 01 January 2025 are same calendar day and a single day fare may be charged, whereas the first presentment request being initiated at 19:30 on 01 January 2025 and the subsequent first presentment request being initiated at 18:45 on 02 January 2025 are not same calendar day despite being in the same 24 hour period, and a two day fare may be charged. Other time periods are envisaged, for example one week, two weeks, or one month. The time period may be based on the type of tickets sold by the transit operator. For example, the time period may be one week if the transit operator sells day and week tickets, whereas the time period may be one month if the transit operator sells day, week and month tickets.

The transit operator may wait the entire time period before deciding which fare to charge. For example, the time period may be one month, and the transit operator may collate all journeys within one month of the first presentment request and determine whether a month ticket or several day tickets is the correct fare.

The first merchant identifier and the second merchant identifier may be identical. Accordingly, the first presentment request and the subsequent presentment request may both be received from a single merchant, either directly or indirectly. Accordingly, the single merchant may be a sole operator of a transit network, or a single merchant through which the consumer makes a purchase and requests a refund.

Alternatively, the first merchant identifier and the second merchant identifier may be different. For example, a transit network may include two operators such as a bus operator and a tram operator. A consumer may begin their journey on a bus and end their journey on a tram. The bus operator may be the merchant responsible for the first presentment request, such that the first presentment request includes the bus operator merchant identifier, and the tram operator may be the merchant responsible for the subsequent first presentment request, such that the subsequent first presentment request includes the tram operator merchant identifier. In prior known methods and systems, the difference in merchant identifier may mean that the consumer's start and end points are not linked. The present invention allows for the consumer's start and end points to be linked.

When the first merchant identifier and the second merchant identifier are different, the method may further comprise storing, in a merchant identifier database, the first merchant identifier and the second merchant identifier, wherein the first merchant identifier is linked to the second merchant identifier in the merchant identifier database. In this way, the first presentment request and the subsequent first presentment request may be linked despite being received from different merchants.

The first presentment request may correspond to a user entering a transit network, and the subsequent presentment request may correspond to a user exiting a transit network, as described in detail herein.

Alternatively, the first presentment request may correspond to a payment request, and the subsequent presentment request may correspond to a refund request. For example, a consumer may make a purchase with their physical card. With prior known systems, the user must typically present the same physical card to obtain a refund. With the present invention, the consumer may make a purchase with their physical card, and then present a token on their device to obtain a refund as the physical card and token are linked.

The first account identifier and the second account identifier may be both associated with a single funding account. For example, the first account identifier may be a primary account number associated with a physical card, and the second account identifier may be a token associated the primary account number associated with the physical card.

Alternatively, the first account identifier may be associated with a first funding account and the second account identifier may be associated with a second funding account. The first funding account and the second funding account may belong to a single consumer. The first funding account and the second funding account may be linked, with the link stored in a database or otherwise. In this way, the consumer may, for example, use their debit card to enter a transit network and use their credit card to exit a transit network. Providing refunds to an alternative funding account may be prohibited by money laundering regulations but is envisaged when such money laundering regulations do not apply.

The method may further comprise storing a consumer payment preference. The consumer payment preference may indicate which funding account should be used to complete a transaction. The method may comprise receiving, from a consumer, the consumer payment preference and storing the consumer payment preference.

Alternatively, no consumer payment preference may be predetermined. The method may further comprises determining the first account identifier is associated with a first funding account and the second account identifier is associated with a second funding account. The method may further comprises presenting, to the consumer, a request to choose a funding account from which the funds should be taken. The request may for example be presented on the consumer's smart device. The method may further comprise receiving, from the consumer, an indication of the funding account from which the funds should be taken. The indication of the funding account from which the funds should be taken may include a desired split of the total cost between the funding accounts. The request to choose a funding account may be time limited, for example set to expire after 1 hour, 2 hours, 4 hours, 6 hours, 12 hours or 24 hours. Should not response be received from the consumer prior to expiry of the request to choose a funding account, the funding account associated with the first account identifier or the second account identifier may be used.

The method may further comprise using another funding account to complete the transaction if the funding account indicated in the consumer payment preference does not contain sufficient funds. For example, the consumer may enter a transit network with their debit card and exit with their credit card. The consumer may predetermine that their debit card should be charged in preference to their credit card. However, if it is determined that the consumer's debit account does not include sufficient funds, the consumer's credit account may be charged despite the consumer's preference to charge their debit account.

The method may further comprise receiving a final authorization request including the transaction link identifier. In this way, the merchant may identify the link between the first presentment request and the second presentment request when making the final request for funds.

The method may further comprise storing, in the database, a third account identifier. The third account identifier may be linked to the first account identifier and the second account identifier in the database. Any number of account identifiers may be stored in the database and linked with the first, second and any other account identifiers.

The method may further comprise receiving a further first presentment request. The further first presentment request may include a third merchant identifier and the third account identifier. Alternatively, the further first presentment request may include the first or second account identifier. The third merchant identifier may be identical to the first and/or the second merchant identifier. The method may comprise receiving any number of first presentment requests. The method may further comprise determining, via the database, the third account identifier, the first account identifier and the second account identifier are linked. The transaction link identifier may identify a link between the further first presentment request, the first presentment request and the subsequent first presentment request. In this way, a consumer may, for example, make several journeys on the transit network and be charged a single fare for their journeys, regardless of whether or not the consumer provides the same or different payment credentials each time they enter and exit the transit network. For example, the consumer may make two journeys on the transit network, entering for the first journey with their physical card, exiting from their first journey with a first token, entering for the second journey with a second token, and exiting from their second journey with a third token. The physical payment card and the three tokens are suitably linked, the consumer may be charged only a single day fare for their two journeys.

The method may further comprise determining the further first presentment request was received within a further predetermined threshold time period from receiving the first presentment request and/or the subsequent first presentment request. The further threshold time period may be 24 hours. Alternatively, the further threshold time period may be a calendar day. Other time periods are envisaged, for example one week, two weeks, or one month. The further time period may be based on the type of tickets sold by the transit operator. The further time period may be identical to the time period. In this way, for example, all first presentment requests within a 24 hour period or a calendar day may be linked together.

According to a second aspect, there is provided a system comprising a processor configured to carry out the method of the first aspect.

According to a third aspect, there is provided a computer program product comprising instructions which, when the program is executed by a computer, cause the computer to carry out the method of the first aspect.

According to a fourth aspect, there is provided a computer-readable storage medium comprising instructions which, when executed by a computer, cause the computer to carry out the method of the first aspect. The storage medium may be non-transitory.

Any feature disclosed with respect to one aspect may be combined with another aspect disclosed herein.

### BRIEF DESCRIPTION OF THE FIGURES

The disclosure will be further described with reference to examples depicted in the accompanying figures in which:
Figure 1 is a flowchart illustrating an example method for linking consumer payment credentials;
Figure 2 is a schematic diagram of a transit terminal system;
Figure 3 is a flowchart illustrating an example method for linking three consumer payment credentials; and
Figure 4 is an example data format passed in a contactless authorization request message.

### DETAILED DESCRIPTION

The following description presents particular examples and, together with the drawings, serves to explain principles of the disclosure. However, the scope of the invention is not intended to be limited to the precise details of the examples, since variations will be apparent to a skilled person and are deemed to be covered by the description. Terms for components used herein should be given a broad interpretation that also encompasses equivalent functions and features. In some cases, alternative terms for structural features may be provided but such terms are not intended to be exhaustive.

Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "top", "bottom", "upper" and "lower" are used for convenience of explanation usually with reference to the illustrations and are not intended to be ultimately limiting if an equivalent function can be achieved with an alternative dimension, orientation and/or direction.

The description herein refers to examples with particular combinations of features, however, it is envisaged that further combinations and cross-combinations of compatible features between embodiments will be possible. Indeed, isolated features may function independently as an invention from other features and not necessarily require implementation as a complete combination.

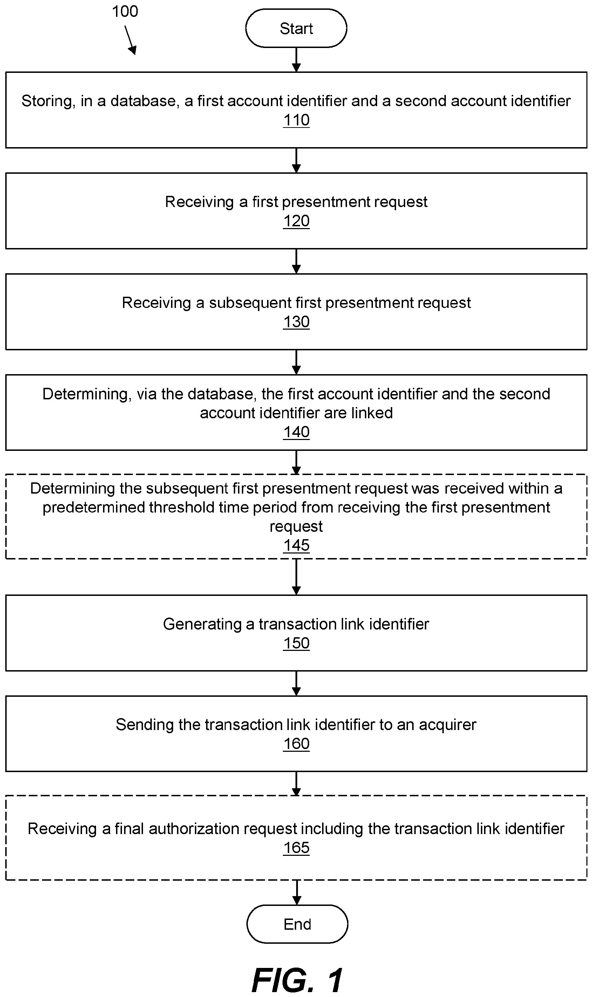

Figure 1 is a flowchart illustrating an example method 100 for linking consumer payment credentials. The method 100 includes storing 110, in a database, a first account identifier and a second account identifier. The first and second account identifiers are linked in the database. The database is searchable such that, with one or both of the first and second account identifiers, the link between the first and second account identifiers may be determined.

The method 100 also includes receiving 120 a first presentment request. The first presentment request may be received from an acquirer. In a transit setting, the first presentment request is generated when the consumer presents their first payment credentials to a barrier upon entry to the transit network. For example, the consumer may tap their physical card on an NFC enabled reader of the entry barrier. The transit operator checks that the payment credentials are in good standing and allows the consumer to enter the transit network.

The method 100 next includes receiving 130 a subsequent first presentment request. The subsequent first presentment request may be received from the acquirer. In the transit setting, the subsequent first presentment request is generated when the consumer presents their second payment credentials to a barrier upon exit from the transit network. For example, the consumer may tap their smart phone on an NFC enabled reader of the exit barrier. The consumer is then able to exit the transit network.

Next, the method 100 include determining 140, via the database, the first account identifier and the second account identifier are linked. The database has previously been configured to store the first account identifier and the second account identifier, and to store the link between the first account identifier and the second account identifier. Accordingly, searching the database, by any known means, for the first account identifier and/or the second account identifier will reveal the link between the first account identifier and the second account identifier.

The method 100 includes an optional step of determining 145 the subsequent first presentment request was received within a predetermined threshold time period from receiving the first presentment request. The time period may be, for example, 24 hours. If the subsequent first presentment request is generated and/or received within the threshold time period of the first presentment request, the first presentment request and the subsequent first presentment request may be linked. If the subsequent first presentment request is generated and/or received outside of the threshold time period of the first presentment request, the first presentment request and the subsequent first presentment request may not be linked.

The method 100 also includes generating 150 a transaction link identifier. The transaction link identifier includes data that identifies the link between the first presentment request and the subsequent first presentment request. Accordingly, the link between the first presentment request and the second presentment request is formally recorded.

The method 100 includes sending 160 the transaction link identifier to the acquirer. The acquirer may pass the transaction link identifier to the merchant. Accordingly, the party responsible for determining the correct charge or fare is informed of the link between the first presentment request and the subsequent presentment request.

As a final, optional, step, the method 100 includes receiving 165 a final authorization request including the transaction link identifier. Accordingly, the transaction related to the first presentment request and subsequent first presentment request may be authorized, and funds moved from the consumer to the merchant.

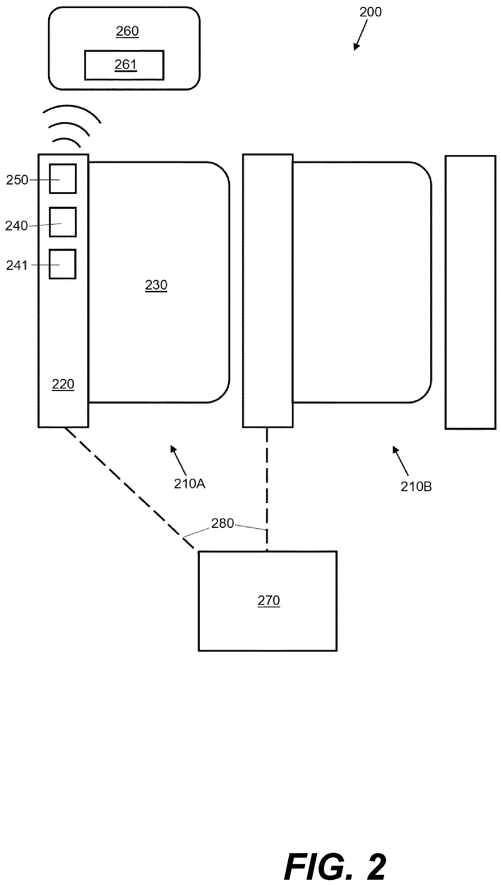

Figure 2 is a schematic diagram of a transit terminal system 200. The system 200 may be, for example, a network of gates or barriers at a train station. Other transit specific systems, such as those present on bus or tram networks, are also envisaged.

The system 200 includes two transit terminals, first terminal 210A and second terminal 210B. The first terminal 210A and second terminal 210B are functionally identical and may be two of tens, hundreds or thousands of such like terminals in a network. For purposes of brevity, only the functioning of the first terminal 210A will be described herein, but the description of the first terminal 210A is considered to apply equally to the second terminal 210B and any other terminal (not shown) in the system 200.

The first terminal 210A includes a fixed barrier portion 220 and a moveable barrier portion 230. The fixed barrier portion 220 may be a post or any other suitable fixed structure. The moveable barrier portion 230 is configured to be moveable relative to the fixed barrier portion 220 between a closed position, as shown in Figure 2, and an open position (not shown). With the moveable barrier portion 230 in the closed position, the first terminal 210A is arranged to prevent a consumer from passing therethrough. With the moveable barrier portion 230 in the open position, the first terminal 210A is arranged to allow a consumer to pass therethrough.

The first terminal 210A includes a processor 240 and associated memory 241. The processor 240 and memory 241 are shown in the fixed barrier portion 220, but the processor 240 and memory 241 may be alternatively positioned or arranged. The processor 240 is configured to control operation of the first terminal 210A, such as opening of the first terminal 210A by controlling a motor (not shown) to move the moveable barrier portion 230 from the closed position and the open position.

The processor 240 also controls operation of an NFC transceiver 250, also shown to be arranged within the fixed barrier portion 220. The NFC transceiver 250 may be arranged to continuously or continually search for an NFC enabled device 260. When a consumer brings an NFC enabled device 260 within range of the NFC transceiver 250, the processor 260 may interrogate a memory 261 of the consumer device 260. The memory 241 associated with the processor 240 may locally store a deny list or have access to a deny list over a network or through alternative means. The deny list contains a list of funding accounts that cannot be used to access the transit system, for example for not having adequate funds in the funding account to pay for a previously completed journey.

Should the details of the funding account associated with the consumer device 260 not be found on the deny list, the moveable barrier portion 230 may be moved to the open position such that the consumer is allowed access to the station via the first terminal 210A.

The processor 240 of the first terminal 210A, and the processor of each other terminal in the system 200, is in communication with a central server 270 via a network 280. According to the method 100 of Figure 1, when a consumer taps their first contactless device on the NFC transceiver 250, the first presentment request is received. When the consumer leaves the transit network, they may tap the first contactless device on the exit terminal. As the same payment credentials are provided at the start and end of the journey, the start and end points are linked, the consumer's journey is determined and the cost for the journey is calculated and charged against the consumer's funding account.

However, if the consumer uses different cards or devices to tap in and out at the entry and exit terminals, prior known systems are unable to link the consumer's journey start and end points and times. Therefore, a consumer using different cards or devices will typically be charged a maximum fare.

Through use of the method 100 of Figure 1, the consumer's journey start and end points and times are linked, regardless of which card or device is used to tap in and tap out of the network. The consumer will therefore be charged the correct fare despite using different cards or devices.

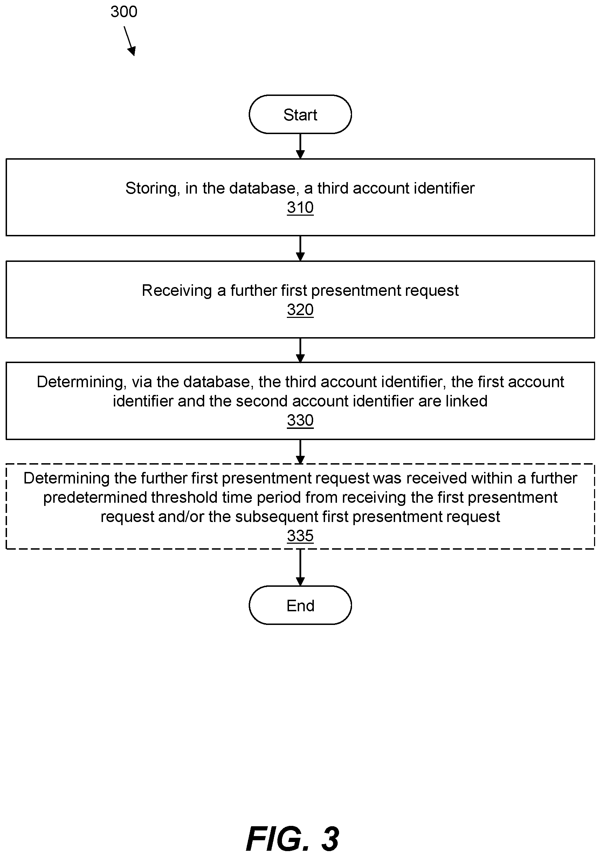

Figure 3 is a flowchart illustrating an example method 300 for linking three consumer payment credentials. The method 300 of Figure 3 may be supplementary to the method of Figure 1. For example, the consumer may have a physical card, and may have added the physical card to the digital wallet application on their smart phone and on their smart watch. Due to the way in which tokenization is currently carried out, the token on the smart phone will appear as a different payment credential to the token on the smart watch, with both tokens appearing as different payment credentials to the physical card. Accordingly, a consumer may have three payment credentials all relating to the same funding account.

The method 300 includes storing 310, in the database, a third account identifier. The third account identifier is stored in the database along with the first account identifier and the second account identifier, and each of the three account identifiers are linked in the database.

The method 300 also includes receiving 320 a further first presentment request. For example, the first presentment request may indicate that the consumer has entered a transit network, the subsequent first presentment request may indicate that the consumer has left the transit network, and the further first presentment request may indicate that the consumer has re-entered the transit network. Any number of additional first presentment requests may be received. The additional first presentment requests may include the first, second, third, or other account identifiers.

The method 300 includes determining 330, via the database, the third account identifier, the first account identifier and the second account identifier are linked. The transaction link identifier, generated 150 in Figure 1, may therefore identify the link between the first, second and third account identifiers.

Finally, the method 300 may include an optional step of determining 335 the further first presentment request was received within a further predetermined threshold time period from receiving the first presentment request and/or the subsequent first presentment request. The further time period may, for example, be 24 hours and may be identical to the time period discussed with reference to Figure 1. In this way, all first presentment requests received within a predetermined time period of the first presentment request may be identified and linked.

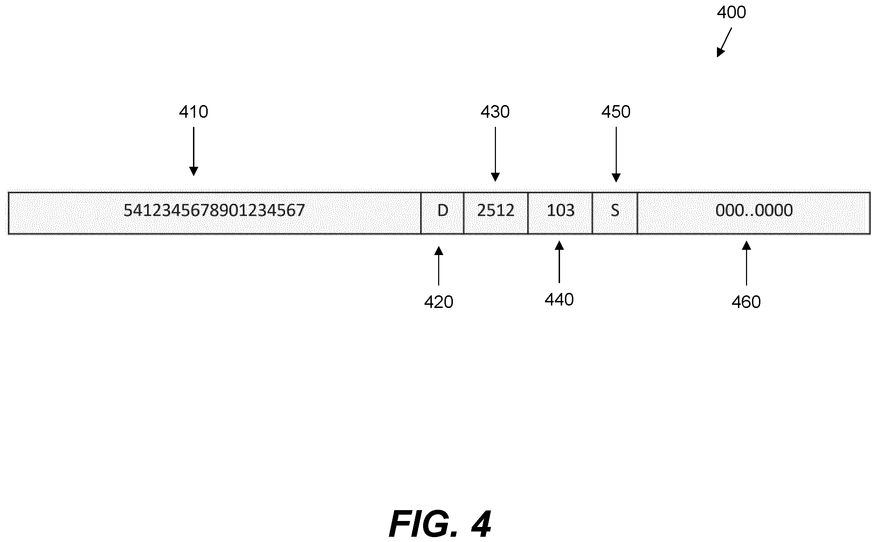

Figure 4 is an example data format 400 passed in a contactless authorization request message. The data is provided as a string comprising an account identifier 410, a separator 420, expiry data 430, a service code 440, a sequence number 450, and discretionary data 460. The account identifier 410 resembles an account number, such as a primary account number, and is typically between 16 and 19 characters long. The separator 420 denotes the end of the account identifier 410 and is required due to the length of the account identifier being variable. The expiry data 430 is typically provided in a YYMM format, such as 2512 for December 2025, although other formats are envisaged. The sequence number 450 is provided next in the string and is followed by the discretionary data 460.

When a contactless authorization request message is generated based on a physical card, the account identifier 410 will be a first number string. When a contactless authorization request message is generated based on a token, the account identifier 410 will be a second number string different to the first number string. According to the method shown in Figure 1, the contactless authorization request message generated based on the physical card and the contactless authorization request message generated based on the token may be linked.

## Claims

1. A method for linking consumer payment credentials, the method comprising:
storing, in a database, a first account identifier and a second account identifier, wherein the first account identifier is linked to the second account identifier in the database;
receiving a first presentment request, wherein the first presentment request includes a first merchant identifier and the first account identifier;
receiving a subsequent first presentment request, wherein the subsequent first presentment request includes a second merchant identifier and the second account identifier;
determining, via the database, the first account identifier and the second account identifier are linked;
generating a transaction link identifier, wherein the transaction link identifier identifies a link between the first presentment request and the subsequent first presentment request; and
sending the transaction link identifier to an acquirer.

2. The method of claim 1, wherein:
one of the first account identifier and the second account identifier is associated with a token, and the other of the first account identifier and the second account identifier is associated with a physical card;
the first account identifier is associated with a first token, and the second account identifier is associated with a second token; or
the first account identifier is associated with a first physical card, and the second account identifier is associated with a second physical card.

3. The method of claim 1 or 2, wherein the first presentment request and the subsequent first presentment request are received from the acquirer.

4. The method of any preceding claim, further comprising:
determining the subsequent first presentment request was received within a
predetermined threshold time period from receiving the first presentment request;
preferably wherein the first presentment request and the subsequent first presentment request include a respective timestamp indicating a time at which the respective first presentment request was initiated by a consumer;
further preferably further comprising storing, in a further database, a time at which the first presentment request and the subsequent first presentment request are received;
further preferably wherein the threshold time period is 24 hours.

5. The method of any preceding claim, wherein the first merchant identifier and the second merchant identifier are identical.

6. The method of any of claims 1 to 4, wherein the first merchant identifier and the second merchant identifier are different, wherein the method further comprises:
storing, in a merchant identifier database, the first merchant identifier and the second merchant identifier, wherein the first merchant identifier is linked to the second merchant identifier in the merchant identifier database.

7. The method of any preceding claim, wherein:
the first presentment request corresponds to a user entering a transit network, and the subsequent presentment request corresponds to a user exiting a transit network; or
the first presentment request corresponds to a payment request, and the subsequent presentment request corresponds to a refund request.

8. The method of any preceding claim, wherein the first account identifier and the second account identifier are both associated with a single funding account.

9. The method of any of claims 1 to 7, wherein:
the first account identifier is associated with a first funding account;
the second account identifier is associated with a second funding account; and
the first funding account and the second funding account belong to a single consumer.

10. The method of claim 9, further comprising storing a consumer payment preference,
wherein the consumer payment preference indicates which funding account should be used to complete a transaction;
preferably further comprising using another funding account to complete the transaction if the funding account indicated in the consumer payment preference does not contain sufficient funds.

11. The method of any preceding claim, further comprising receiving a final authorization request including the transaction link identifier.

12. The method of any preceding claim, further comprising:
storing, in the database, a third account identifier, wherein the third account identifier is linked to the first account identifier and the second account identifier in the database;
preferably further comprising:
receiving a further first presentment request, wherein the further first presentment request includes a third merchant identifier and the third account identifier; and
determining, via the database, the third account identifier, the first account identifier and the second account identifier are linked;
wherein the transaction link identifier identifies a link between the further first presentment request, the first presentment request and the subsequent first presentment request;
further preferably further comprising:
determining the further first presentment request was received within a further predetermined threshold time period from receiving the first presentment request and/or the subsequent first presentment request;
further preferably wherein the further threshold time period is 24 hours

13. A system comprising a processor configured to carry out the method of any preceding claim.

14. A computer program product comprising instructions which, when the program is executed by a computer, cause the computer to carry out the method of any of claims 1 to 12.

15. A computer-readable storage medium comprising instructions which, when executed by a computer, cause the computer to carry out the method of any of claims 1 to 12.
